# EUROPÄISCHE PATENTSCHRIFT

(11) **EP 3 680 298 B1**
(45) Veröffentlichungstag und Bekanntmachung des Hinweises auf die Patenterteilung: **01.09.2021**
(21) Anmeldenummer: 19151443.9
(22) Anmeldetag: 11.01.2019
(51) Int. Cl.: C09D 11/17, C09D 11/16

(54) **SCHREIB-, MARKIER- UND/ODER ZEICHENFLÜSSIGKEIT FÜR KAPILLARSYSTEME, INSBESONDERE FÜR AUFTRAGSGERÄTE MIT EINEM KAPILLARSYSTEM, UND AUFTRAGSGERÄT**
WRITING, MARKING AND/OR CHARACTER LIQUID FOR CAPILLARY SYSTEMS, IN PARTICULAR FOR APPLICATORS WITH A CAPILLARY SYSTEM AND APPLICATOR
LIQUIDE D'ÉCRITURE, DE MARQUAGE ET / OU DE SIGNALISATION POUR SYSTÈMES CAPILLAIRES, EN PARTICULIER POUR APPAREILS D'APPLICATION DOTÉS D'UN SYSTÈME CAPILLAIRE ET APPAREIL D'APPLICATION

(43) Veröffentlichungstag der Anmeldung: 15.07.2020
(73) Patentinhaber: Faber- Castell AG, 90546 Stein (DE)
(72) Erfinder: Appel, Tatiana, 90522 Oberasbach (DE); Heuler, Baukis, 90471 Nürnberg (DE); Lugert, Gerhard, 90431 Nürnberg (DE)
(74) Vertreter: Schlögl, Markus

(56) Entgegenhaltungen:
- CN-A- 105 153 805
- CN-A- 108 841 246
- GB-A- 781 808
- JP-A- H04 270 771

## Beschreibung

Die Erfindung betrifft eine graue bis schwarze, wässrige Schreib-, Markier- und/oder Zeichenflüssigkeit für Kapillarsysteme, insbesondere für Auftragsgeräte mit einem Kapillarsystem, und ein Auftragsgerät, in welchem eine solche Schreib-, Markier- und/oder Zeichenflüssigkeit verwendet wird.

Farbige Schreib-, Markier- und/oder Zeichenflüssigkeiten mit Farbmitteln, die in Auftragsgeräten mit Kapillarsystemen verwendet werden, sind bekannt. Auch die Verwendung von wässrigen Schreib-, Markier- und/oder Zeichenflüssigkeiten bzw. Tinten für die Anwendung auf Papier ist seit langem bekannt. Als Farbmittel werden üblicherweise Farbstoffe, wie beispielsweise anionische Farbstoffe, oder auch farbige Pigmente eingesetzt. Diese werden in der Schreib-, Markier- und/oder Zeichenflüssigkeit, die für den Einsatz in Kapillarsystemen vorgesehen ist, mittels Bindemitteln und/oder Tensiden stabilisiert. In Kapillarsystemen eingesetzte Flüssigkeiten müssen zur Sicherstellung einer ausreichenden Applikation sehr geringe Viskositäten von kleiner 50 mPas, bevorzugt jedoch kleiner 20 mPas (Brookfield, 20 °C, Kegel-Platte CPE-40) besitzen. Auftragsgeräte, in welchen solche Schreib-, Markier- und/oder Zeichenflüssigkeiten eingesetzt werden, umfassen einen Schaft, typischerweise ein Kunststoff- oder Metallgehäuse, auf welchen im Nichtgebrauchszustand eine Verschlusskappe aufgesteckt wird. Innerhalb des Schaftes ist ein Speicher für die Schreib-, Markier- und/oder Zeichenflüssigkeit aus einem kapillaren Material, beispielsweise aus Polyester- oder Polyolefinfasern angeordnet, der mit einem Auftragselement bzw. einer Schreib-, Markier- oder Zeichenspitze aus einem ebenfalls kapillaren Material, z.B. einer Faser- oder Sinterspitze fluidisch verbunden ist, sodass die Schreib-, Markier- und/oder Zeichenflüssigkeit aufgrund von Adhäsionskräften bzw. aufgrund des Kapillareffektes aus dem Speicher an die Spitze des Auftragselementes transportiert werden kann.

Auf der anderen Seite existieren bereits seit mehr als 200 Jahren Graphitminen, bei denen Graphit und Ton gemischt, zu einem Strang gepresst, getrocknet und anschließend bei ca. 1000°C gebrannt werden. Die so erhaltene Graphitmine wird anschließend mit Ölen oder Wachsen imprägniert. Die Härte der Mine wird dabei entscheidend durch das Mischungsverhältnis von Graphit und Ton beeinflusst. Je höher der Graphitanteil, desto weicher und "schwarzer" die Mine.

Es ist Aufgabe der Erfindung eine Schreib-, Markier- und/oder Zeichenflüssigkeit für Kapillarsysteme, insbesondere für Auftragsgeräte mit Kapillarsystemen anzugeben, mit der sich mit unterschiedlichen Graphitanteilen in der Flüssigkeit Abstriche unterschiedlicher Grautöne erzeugen lassen. Ferner ist es Aufgabe der Erfindung ein Auftragsgerät, insbesondere ein Auftragsgerät mit einem Kapillarsystem anzugeben, in welchem die Schreib-, Markier- und/oder Zeichenflüssigkeit zum Einsatz kommt.

Die Aufgabe wird gelöst mit einer wässrigen Schreib-, Markier- und/oder Zeichenflüssigkeit, insbesondere einer grauen bis schwarzen Schreib-, Markier- und/oder Zeichenflüssigkeit, für Kapillarsysteme, insbesondere für Auftragsgeräte mit einem Kapillarsystem, mit den Merkmalen gemäß Anspruch 1. Die wässrige Schreib-, Markier- und/oder Zeichenflüssigkeit weist eine Viskosität von weniger als 50 mPas, insbesondere weniger als 20 mPas (Brookfield, 20 °C, Kegel-Platte CPE-40) auf und enthält ein Netzmittel und Graphit mit einem Kohlenstoffgehalt zwischen 95 und 99,9 Gew. %, mit einem Aschegehalt zwischen 0,1 und 5 Gew. % und mit einer Partikelgröße ≤ 20 µm bei D90. Ferner enthält die wässrige Schreib-, Markier- und/oder Zeichenflüssigkeit zumindest ein Trennmittel, insbesondere in einer Konzentration von 2 bis 15 Gew. %, wobei als Trennmittel Bariumsulfat und/oder eine wässrige, dünnflüssige, nicht sedimentierende kolloidale Dispersion aus nanoteiligen Siliziumdioxid-Partikeln enthalten ist

Die Schreib-, Markier- und/oder Zeichenflüssigkeit ist somit eine Tinte auf Wasserbasis, in der Graphit enthalten ist und deren Aufstriche unterschiedlich starke graphitartig glänzende Grautöne zeigen. Dadurch lassen sich die unterschiedlichen Härtegrade vergleichbar zu denen herkömmlicher Graphitfeststoffminen auch mit wässrigen Tinten darstellen. Ferner zeigen die Aufstriche eine gute Radierbarkeit auf Papier, die vergleichbar zu der von Graphitfeststoffminen ist. Bei einer Partikelgröße von ≤ 20 µm bei D90 der Graphitpartikel wird zudem gewährleistet, dass die Kapillarkanäle nicht verstopfen.

Das Netzmittel wird zur Einstellung der wunschgemäßen Viskosität und auch zur Reduzierung der Oberflächenspannung auf bevorzugte Bereiche zwischen 25 bis 40 mN/m zugesetzt. Durch die niedrige Viskosität < 50 mPas, vorzugsweise sogar < 20 mPas der Schreib-, Markier- und/oder Zeichenflüssigkeit ist eine Applikation über Kapillarsysteme möglich.

Um Agglomerationen und Sedimentation der verwendeten Graphitpartikel zu behindern, wird der wässrigen Schreib-, Markier- und/oder Zeichenflüssigkeit zumindest ein Trennmittel zugesetzt. Als ideal hat sich insbesondere eine Konzentration von 2 bis 15 Gew. % herausgestellt. Das Trennmittel ist insbesondere ein fein verteiltes, stabilisiertes Bariumsulfat. Als Beispiel sei hier das unter dem Handelsnamen Spacer Concept - N (SC-90-NC)⁶⁾ vertriebene Trennmittel mit folgender Spezifikation genannt:

| | |
|---|---|
| Lagerstabilität: | 40°C > 6 Wochen |
| Dichte: | 1,15 g/ml |
| pH-Wert: | 9,2 bis 10,2 |
| Viskosität: | < 3500 mPas |
| Festkörpergehalt: | 40 - 42 % |

Zusätzlich oder alternativ zum Bariumsulfat können insbesondere auch wässrige, dünnflüssige, nicht sedimentierende kolloidale Dispersionen aus nanoteiligen Siliziumdioxid-Partikeln als Trennmittel eingesetzt werden. Besonders empfehlenswert sind hierbei unter den Handelsnamen Borchi Coll 10⁴⁾ oder Borchi Coll 20⁵⁾ vertriebene Trennmittel zu nennen, die folgende Spezifikationen aufweisen:

**Borchi Coll 10:**

| | |
|---|---|
| Festkörpergehalt: | 30 - 31% |
| Dichte (20°C; DIN 51757) | 1,205 - 1213 g/cm³ |
| Viskosität (20°C; DIN 53015): | max. 7 mPas |
| pH-Wert (DIN 19268): | 9,50 - 10,50 |
| Titrierte BET-Oberfläche: | 280 - 320 m²/g |
| Gehalt an Na₂O: | 0,30 - 0,40 % |

**Borchi Coll 20:**

| | |
|---|---|
| Festkörpergehalt: | 30 - 31% |
| Dichte (20°C; DIN 51757) | 1,202 - 1210 g/cm³ |
| Viskosität (20°C; DIN 53015): | max. 5 mPas |
| pH-Wert (DIN 19268): | 8,50 - 9,50 |
| Titrierte BET-Oberfläche: | 180 - 220 m²/g |
| Gehalt an NazO: | 0,12 - 018 % |

Gerade bei der Verwendung der genannten Trennmittel war eine Sedimentation der Graphitpartikel kaum zu beobachten und die wässrige Schreib-, Markier- und/oder Zeichenflüssigkeit zeigt eine sehr gute Lagerstabilität. Dadurch kann diese über einen längeren Zeitraum hinweg in Auftragsgeräten mit Kapillarsystem verwendet werden, ohne dass störende Ablagerungen innerhalb des Kapillarsystems auftreten, welche die Kapillarkanäle verstopfen können.

Bei einer Vielzahl von Versuchen zeigte sich insbesondere ein Graphitanteil im Bereich von 1 bis 30 Gew. % in der Schreib-, Markier- und/oder Zeichenflüssigkeit als geeignet. Besonders bevorzugt wird Graphit mit einem Anteil von 5 bis 20 Gew. % innerhalb der wässrigen Schreib-, Markier- und/oder Zeichenflüssigkeit eingesetzt.

Ferner hat sich insbesondere ein Graphittyp mit einem Kohlenstoffgehalt zwischen 96 und 97 Gew. %, einen Aschegehalt zwischen 3 bis 4 Gew. % und einer Partikelgröße < 20 µm bei D90, bei einer Korngrößenverteilung von mindestens 99,9 % < 40 µm als gut geeignet erwiesen. Hervorragende Ergebnisse, insbesondere hinsichtlich des Abstrichverhaltens, wurden zudem beim Einsatz eines Graphits mit einem Kohlenstoffgehalt zwischen 98,5 und 99,5 Gew. %, einem Aschegehalt zwischen 0,1 bis 0,5 Gew. % und einer Partikelgröße < 10 µm bei D90 erzielt. Die Bestimmung des Aschegehaltes erfolgte nach einem Verfahren gemäß DIN 51903, die Korngrößenverteilung wurde mittels Laserbeugung (Sympatex HELOS) ermittelt.

Die empfehlenswerten Einsatzkonzentrationen für das Netzmittel liegen zwischen 0,5 bis 3 Gew. %. Hierbei hat sich der Zusatz eines Polyethermodifizierten Polysiloxans als Netzmittels als geeignet erwiesen. Besonders geeignet ist hierbei das unter dem Handelsnamen Abil B 8851¹⁾ vertriebene Additiv mit insbesondere folgender Spezifikation:

| | |
|---|---|
| Viskosität (dynamisch; 25°C; DIN 53019): | 330 - 570 mPas |
| Dichte (25°C; DIN 51757): | 1,045 - 1,065 g/cm³ |

Bevorzugt ist zusätzlich der Einsatz von einem oder mehreren Feuchthaltemitteln, insbesondere mit einem Anteil zwischen 2 und 10 Gew. %, um das Trockenverhalten des Aufstriches zu verbessern und die Fließeigenschaften der Schreib-, Markier- und/oder Zeichenflüssigkeit im Kapillarsystem positiv zu beeinflussen. Als Beispiele seien hier Harnstoff, Glycerin sowie einschlägige Glykole, wie beispielsweise Propylenglykol oder Butylenglykol genannt.

Ferner hat es sich als vorteilhaft erwiesen, wenn der Schreib-, Markier- und/oder Zeichenflüssigkeit Konservierungsmittel, insbesondere in einer Konzentration zwischen 0,2 bis 2,5 Gew. % zugegeben werden. Beispiele für Konservierungsmittel, die zweckmäßigerweise einzeln oder in Kombination zugegeben werden, sind Phenoxyethanol und/oder Caprylylglycol aber auch Formaldehydabspalter oder Isothiazolinone (Methylisothiazolinon (MIT), Chlormethylisothiazolinon (CIT), Benzisothiazolinon (BIT) oder Octylisothiazolinon (OIT)). Ein geeignetes Konservierungsmittel, welches einen Formaldehyabspalter darstellt, ist beispielsweise unter dem Handelsnamen ACTICIDE SR 7034²⁾ erhältlich. Ein weiteres geeignetes Konservierungsmittel, ein Isothiazolinonbasiertes Biozid, welches 2-Brom-2-nitropropan-1,3-diol und 2-Octyl-2H-isothiazol-3-on enthält, ist beispielsweise unter dem Handelsnamen ACTICIDE LT2³⁾ erhältlich.

Bei einer bevorzugten Ausführungsform ist in der Schreib-, Markier- und/oder Zeichenflüssigkeit neben Graphit auch amorpher Kohlenstoff, insbesondere mit einem Anteil zwischen 0,1 und 8 Gew. %, enthalten. Durch die Zugabe des amorphen Kohlenstoffs - als Beispiel sei hier Ruß, Hostafine Black T⁷⁾ genannt - lässt sich die Schwärze der Schreib-, Markier- und/oder Zeichenflüssigkeit erhöhen. Dies ist insbesondere empfehlenswert zur Erzielung hoher Schwärze, z. B. zur Nachstellung von Härtegraden 6B bis 10B.

Bei einer vorteilhaften Ausführungsform enthält die Schreib-, Markier- und/oder Zeichenflüssigkeit zumindest einen Farbstoff und/oder zumindest ein Farbpigment. Die Zugabe des zumindest einen Farbstoffes und/oder des zumindest einen Farbpigments erfolgt dabei insbesondere in einer Konzentration von 0,1 bis 5 Gew. %.

Insbesondere kann zur Vertiefung der Schwärze in geringen Mengen zumindest ein Blaufarbstoff, wie z. B. Patentblau, und/oder zumindest ein Blaupigment, wie z. B. Ultramarin oder Phthalocyaninblau, in geringen Prozentsätzen zwischen 0,1 bis max. 5 Gew. % eingesetzt werden.

Wird der Schreib-, Markier- und/oder Zeichenflüssigkeit ein Farbstoff oder Farbpigment zugesetzt, ergeben sich graphitgraue Aufstriche, bei welchen durch Radieren der an der Oberfläche anlagernde Graphit entfernt werden kann und der eingesetzte Farbstoff oder das eingesetzte Farbpigment als Papierauftrag zurückbleibt. Bei der Verwendung eines blauen Farbstoffes, beispielsweise Acid Blue 9, CI 42090 in geringen Konzentrationen zusammen mit Graphit in der wässrigen Schreib-, Markier- und/oder Zeichenflüssigkeit wird beispielsweise ein graphitartiger glänzender Farbaufstrich auf Papier ermöglicht. Nach Wegradieren der Graphitanteile tritt eine Farbveränderung zu Blau auf. Die Verwendung anderer Farbstoffe, insbesondere anionischer Farbstoffe in gelben, roten, grünen und anderen Farbtönen ist hierbei auch möglich. Alternativ können auch beliebige Farbpigmente verwendet werden.

Der verbleibende Teil der Zusammensetzung der Schreib-, Markier- und/oder Zeichenflüssigkeit entfällt auf demineralisiertes Wasser, welches als Lösemittel verwendet wird. Insbesondere ist demineralisiertes Wasser in einer Konzentration von 60 bis 90 Gew. %, besonders bevorzugt in einer Konzentration von 70 bis 85 Gew.-% enthalten.

Die wässrige Schreib-, Markier- und/oder Zeichenflüssigkeit wird in einem Auftragsgerät, insbesondere einem Auftragsgerät mit einem Kapillarsystem verwendet. Das Auftragsgerät, insbesondere ein Schreib-, Markier- oder Zeichengerät, weist hierfür eine Ausgestaltung mit den Merkmalen gemäß Anspruch 13 auf und umfasst eine Schreib-, Markier- oder Zeichenspitze aus einem kapillaren Material und einen eine wässrige Schreib-, Markier- und/oder Zeichenflüssigkeit mit den vorstehend beschriebenen Eigenschaften enthaltenden Speicher aus einem kapillaren Material.

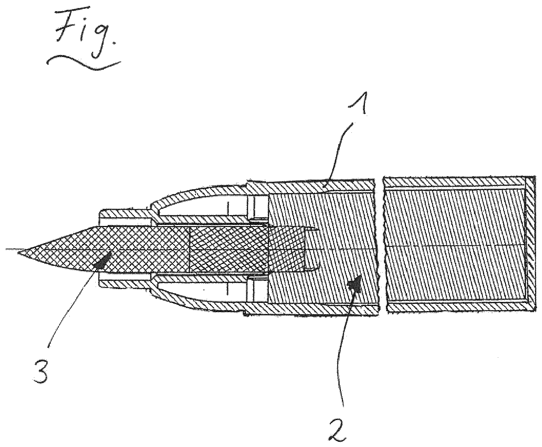

Die Erfindung wird nun nachfolgend anhand von Ausführungsbeispielen und einer Zeichnung (Fig. 1), die ein kapillares Auftragsgerät in Längsschnittdarstellung zeigt, näher erläutert.

Das Auftragsgerät ist im Wesentlichen stiftförmig und weist einen Schaft 1 auf, in dem ein Speicher 2 aus einem kapillaren Material bzw. ein Faserspeicher geringer Dichte, z.B. ein Polyesterfaserspeicher vorhanden ist. Das vordere Stiftende trägt eine Schreibspitze 3 aus einem kapillaren Material bzw. eine Faserspitze, die mit ihrem hinteren Ende mit dem Faserspeicher 2 in Verbindung steht bzw. in diesen hineinragt.

Die Herstellung der wässrigen Schreib-, Markier- und/oder Zeichenflüssigkeit erfolgt überwiegend in Mischkesseln, in welchen die Bestandteile der Schreib-, Markier- und/oder Zeichenflüssigkeit zugegeben werden. Dabei wird ständig mittels Rührwerkzeugen gerührt, um die einzelnen Komponenten intensiv miteinander zu vermischen und ausreichend gleichmäßig zu verteilen. Anschließend wird die so erhaltene Schreib-, Markier- und/oder Zeichenflüssigkeit in den Speicher 2 aus kapillarem Material des oben beschriebenen Schreibgerätes ei ngefüllt.

Bei der Durchführung der Versuche wurde die Schreib-, Markier- und/oder Zeichenflüssigkeit mit dem Auftragsgerät auf Papier aufgebracht. Anschließend wurde der Aufstrich mit denen herkömmlicher gebrannter Graphitfeststoffminen verglichen und hinsichtlich seines Grautones bewertet. Ferner wurde die Radierbarkeit getestet.

Nachfolgend sind vier Beispielrezepturen für Schreib-, Markier- und/oder Zeichenflüssigkeiten angeführt. Die Angaben in den Beispielrezepturen in Gewichtsprozent beziehen sich jeweils auf die Gesamtmasse der Schreib-, Markier- und/oder Zeichenflüssigkeit.

### Beispiel 1:

Beispielrezeptur für eine schwarze Schreib-, Markier- und/oder Zeichenflüssigkeit, die einem mittleren Härtegrad (Härtegrad HB/F) entspricht, mit einer Viskosität von 3,0 mPas (Brookfield, 20 °C, Kegel-Platte CPE-40):

| | |
|---|---|
| Abil B 8851¹⁾ | 2,5 Gew. % |
| Acticide SR 7034²⁾ | 0,5 Gew. % |
| Acticide LT2³⁾ | 0,5 Gew. % |
| Glycerin | 2,5 Gew. % |
| Borchi Coll 10⁴⁾ | 5,0 Gew. % |
| Graphit (Kohlenst.gehalt 96-97 Gew.%, d90 < 20 µm) | 5,0 Gew. % |
| Wasser dem. | 84,0 Gew. % |

### Beispiel 2:

Beispielrezeptur für eine dunkelgraue, graphitisch glänzende Schreib-, Markier- und/oder Zeichenflüssigkeit mit einer Viskosität von 4,0 mPas (Brookfield, 20 °C, Kegel-Platte CPE-40):

| | |
|---|---|
| Abil B 8851¹⁾ | 1,0 Gew. % |
| Acticide SR 7034²⁾ | 0,4 Gew. % |
| Acticide LT2³⁾ | 0,3 Gew. % |
| Borchi Coll 20⁵⁾ | 5,0 Gew. % |
| Graphit (Kohlenst.gehalt ca. 99 Gew. % d90 < 10 µm) | 12,0 Gew. % |
| Wasser dem. | 81,3 Gew. % |

### Beispiel 3:

Beispielrezeptur für eine tiefschwarze, graphitisch glänzende Schreib-, Markier- und/oder Zeichenflüssigkeit, die - bei grobporiger Kapillarspitze - einem sehr weichen Härtegrad entspricht (Härtegrad 9B) mit einer Viskosität von 5,0 mPas (Brookfield, 20 °C, Kegel-Platte CPE-40):

| | |
|---|---|
| Abil B 8851¹⁾ | 2,0 Gew. % |
| Caprylylglycol | 1,0 Gew. % |
| Phenoxyethanol | 1,0 Gew. % |
| Propylenglykol | 4,0 Gew. % |
| Spacer Concept - N (SC-90-NC)⁶⁾ | 5,0 Gew. % |
| Graphit (ca.99% Kohlenstoff, d90 < 10 µm) | 8,0 Gew. % |
| Ruß, Hostafine Black T⁷⁾ | 5,0 Gew. % |
| Wasser dem. | 74,0 Gew. % |

Bei der Schreib-, Markier- und/oder Zeichenflüssigkeit gemäß Beispiel 3 wurde ein amorpher Kohlenstoff zugesetzt, nämlich in Form von Ruß. Dadurch wurde die Schwärze des Aufstriches deutlich erhöht.

### Beispiel 4:

Beispielrezeptur für eine graphitfarbene Schreib-, Markier- und/oder Zeichenflüssigkeit mit einem wasserlöslichen anionischen Farbstoff mit einer Viskosität von 3,5 mPas (Brookfield, 20 °C, Kegel-Platte CPE-40):

| | |
|---|---|
| Abil B 8851¹⁾ | 2,0 Gew. % |
| Caprylylglycol | 0,5 Gew. % |
| Phenoxyethanol | 1,0 Gew. % |
| Propylenglycol | 4,0 Gew. % |
| Borchi Coll 10⁴⁾ | 4,0 Gew. % |
| Graphit (Kohlenstoffgehalt ca. 99 Gew. %, d90 < 10 µm) | 10,0 Gew. % |
| Farbstoff Acid Blue 9 CI42090 | 1,5 Gew. % |
| Wasser dem. | 77,0 Gew. % |

Eine Schreib-, Markier- und/oder Zeichenflüssigkeit mit einer Zusammensetzung entsprechend Beispiel 4 schimmert nach dem Aufstrich graphitgrau, was etwa einem Härtegrad 4B entspricht. Nach Antrocknen auf handelsüblichem Papier wurde der Aufstrich bzw. die Graphitschicht mittels Radiergummi entfernt. Zurück blieb ein blauer Farbauftrag und Farbton des eingesetzten Blaufarbstoffes.

### Beispiel 5:

Beispielrezeptur für eine graphitfarbene Schreib-, Markier- und/oder Zeichenflüssigkeit mit einem Farbpigment mit einer Viskosität von 3,5 mPas (Brookfield, 20 °C, Kegel-Platte CPE-40):

| | |
|---|---|
| Abil B 8851¹⁾ | 2,0 Gew. % |
| Caprylylglycol | 0,5 Gew. % |

| | |
|---|---|
| Phenoxyethanol | 1,0 Gew. % |
| Propylenglycol | 4,0 Gew. % |
| Borchi Coll 10⁴⁾ | 4,0 Gew. % |
| Graphit (Kohlenstoffgehalt ca. 99 Gew. %, d90 < 10 µm) | 10,0 Gew. % |
| Hostafine Blue B2G⁸⁾ | 1,5 Gew. % |
| Wasser dem. | 77,0 Gew. % |

Eine Schreib-, Markier- und/oder Zeichenflüssigkeit mit einer Zusammensetzung entsprechend Beispiel 5 schimmert nach dem Aufstrich ebenfalls graphitgrau (entspricht Härtegrad 4B). Nach Antrocknen auf handelsüblichem Papier wurde der Aufstrich bzw. die Graphitschicht wiederum mittels Radiergummi entfernt und es blieb ein blauer Farbauftrag zurück.

### Hersteller:

| | |
|---|---|
| 1) | Evonik Industries AG, Goldschmidtstr. 100, 45127 Essen, Deutschland |
| 2), 3) | Thor GmbH, Landwehrstraße 1, 67346 Speyer, Deutschland |
| 4), 5) | OMG Borchers GmbH, Berghausener Str. 100, 40764 Langenfeld, Deutschland |
| 6) | Hemmelrath Technologies, Dr.-Gammert-Str. 3, 63906 Erlenbach, Deutschland |
| 7), 8) | Clariant Produkte GmbH, Industriepark Höchst, 65926 Frankfurt a.M., Deutschland |

## Patentansprüche

1. Wässrige Schreib-, Markier- und/oder Zeichenflüssigkeit für Kapillarsysteme, insbesondere für Auftragsgeräte mit einem Kapillarsystem, die eine Viskosität von weniger als 50 mPas, insbesondere weniger als 20 mPas (Brookfield, 20 °C, Kegel-Platte CPE-40) aufweist, enthaltend ein Netzmittel, Graphit mit einem Kohlenstoffgehalt zwischen 95 und 99,9 Gew. %, mit einem Aschegehalt zwischen 0,1 und 5 Gew. % und mit einer Partikelgröße ≤ 20 µm bei D90, und zumindest ein Trennmittel, insbesondere in einer Konzentration von 2 bis 15 Gew. %, wobei als Trennmittel Bariumsulfat und/oder eine wässrige, dünnflüssige, nicht sedimentierende kolloidale Dispersion aus nanoteiligen Siliziumdioxid-Partikeln enthalten ist.

2. Wässrige Schreib-, Markier- und/oder Zeichenflüssigkeit nach Anspruch 1, wobei der Graphit mit einem Anteil von 1 bis 30 Gew. %, insbesondere mit einem Anteil von 5 Gew. % bis 20 Gew. % enthalten ist.

3. Wässrige Schreib-, Markier- und/oder Zeichenflüssigkeit nach einem der Ansprüche 1 oder 2, wobei der Graphit einen Kohlenstoffgehalt zwischen 96 und 97 Gew. %, einen Aschegehalt zwischen 3 bis 4 Gew. % und eine Partikelgröße < 20 µm bei D90 aufweist.

4. Wässrige Schreib-, Markier- und/oder Zeichenflüssigkeit nach einem der Ansprüche 1 oder 2, wobei der Graphit einen Kohlenstoffgehalt zwischen 98,5 und 99,5 Gew. %, einen Aschegehalt zwischen 0,1 bis 0,5 Gew. % und eine Partikelgröße < 10 µm bei D90 aufweist.

5. Wässrige Schreib-, Markier- und/oder Zeichenflüssigkeit nach einem der vorhergehenden Ansprüche, wobei das Netzmittel in einer Konzentration von 0,5 bis 3 Gew. % enthalten ist.

6. Wässrige Schreib-, Markier- und/oder Zeichenflüssigkeit nach einem der vorhergehenden Ansprüche, wobei als Netzmittel ein Polyether modifiziertes Polysiloxan eingesetzt wird.

7. Wässrige Schreib-, Markier- und/oder Zeichenflüssigkeit nach einem der vorhergehenden Ansprüche, wobei zumindest ein Feuchthaltemittel, insbesondere mit einem Anteil zwischen 2 und 10 Gew. % enthalten ist.

8. Wässrige Schreib-, Markier- und/oder Zeichenflüssigkeit nach einem der vorhergehenden Ansprüche, enthaltend zumindest ein Konservierungsmittel, insbesondere in einer Konzentration von maximal 0,2 bis 2,5 Gew. %.

9. Wässrige Schreib-, Markier- und/oder Zeichenflüssigkeit nach einem der vorhergehenden Ansprüche, enthaltend amorphen Kohlenstoff, insbesondere mit einem Anteil zwischen 0,1 und 8 Gew. %.

10. Wässrige Schreib-, Markier- und/oder Zeichenflüssigkeit nach einem der vorhergehenden Ansprüche, enthaltend zumindest einen Farbstoff und/oder zumindest ein Farbpigment.

11. Wässrige Schreib-, Markier- und/oder Zeichenflüssigkeit nach Anspruch 10, wobei der zumindest eine Farbstoff und/oder das zumindest eine Farbpigment in einer Konzentration von 0,1 bis 5 Gew. % enthalten ist.

12. Schreib-, Markier- und/oder Zeichenflüssigkeit nach einem der Ansprüche 10 oder 11, wobei als Farbstoff ein anionischer Farbstoff enthalten ist.

13. Auftragsgerät, insbesondere Schreib-, Markier- oder Zeichengerät mit einer Schreib-, Markier- oder Zeichenspitze (3) aus einem kapillaren Material und einem eine wässrige Schreib-, Markier- und/oder Zeichenflüssigkeit nach einem der vorhergehenden Ansprüche enthaltenden Speicher (2) aus einem kapillaren Material.

## Claims

1. Aqueous writing, marking and/or drawing fluid for capillary systems, in particular for applicators with a capillary system, which has a viscosity of less than 50 mPas, in particular less than 20 mPas (Brookfield, 20 °C, cone-plate CPE-40), containing a wetting agent, graphite having a carbon content between 95 and 99.9 wt.%, an ash content between 0.1 and 5 wt.% and a particle size ≤ 20 µm at D90, and at least one release agent, in particular in a concentration of 2 to 15 wt.%, wherein barium sulfate and/or an aqueous, low-viscosity, non-sedimenting colloidal dispersion of nano-particulate silica particles is contained as a release agent.

2. Aqueous writing, marking and/or drawing fluid according to claim 1, wherein the graphite is contained in a proportion of 1 to 30 wt.%, in particular in a concentration of 5 wt.% to 20 wt.%

3. Aqueous writing, marking and/or drawing fluid according to claim 1 or 2, wherein the graphite has a carbon content between 96 and 97 wt.%, an ash content between 3 to 4 wt.%, and a particle size < 20 µm at D90.

4. Aqueous writing, marking and/or drawing fluid according to claim 1 or 2, wherein the graphite has a carbon content between 98.5 and 99.5 wt.%, an ash content between 0.1 to 0.5 wt.%, and a particle size < 10 µm at D90.

5. Aqueous writing, marking and/or drawing fluid according to one of the preceding claims, wherein the wetting agent is contained in a concentration of 0.5 to 3 wt.%.

6. Aqueous writing, marking and/or drawing fluid according to one of the preceding claims, wherein a polyether-modified polysiloxane is used as a wetting agent.

7. Aqueous writing, marking and/or drawing fluid according to one of the preceding claims, wherein at least one humectant is contained, in particular in a proportion between 2 and 10 wt.%.

8. Aqueous writing, marking and/or drawing fluid according to one of the preceding claims, containing at least one preserving agent, in particular in a concentration of at most 0.2 to 2.5 wt.%.

9. Aqueous writing, marking and/or drawing fluid according to one of the preceding claims, containing amorphous carbon, in particular in a proportion between 0.1 and 8 wt.%.

10. Aqueous writing, marking and/or drawing fluid according to one of the preceding claims, comprising at least one dye and/or at least one pigment.

11. Aqueous writing, marking and/or drawing fluid according to claim 10, wherein the at least one dye and/or the at least one pigment is contained in a concentration of 0.1 to 5 wt.%.

12. Writing, marking and/or drawing fluid according to claim 10 or 11, wherein the dye present is an anionic dye.

13. Applicator, in particular writing, marking or drawing instrument with a writing, marking or drawing tip (3) made of a capillary material and a reservoir (2) made of a capillary material containing an aqueous writing, marking and/or drawing liquid according to one of the preceding claims.

## Revendications

1. Liquide aqueux d'écriture, de marquage et/ou de dessin, pour des systèmes capillaires, notamment pour des appereils d'application ayant un système capillaire, qui a une viscosité de moins de 50 mPas, notamment de moins 20 mPas (Brookfield, 20 °C, cone-plaque CPE-40), contenant un agent mouillant, du graphite ayant une teneur en carbone comprise entre 95 et 99,9 % en poids, une teneur en cendres comprise entre 0,1 et 5 % en poids et ayant une taille de particules ≤ 20 µm à D90, et au moins un agent de démoulage, notamment en une concentration de 2 à 15 % en poids, dans lequel, comme agent de démoulage, il est contenu le sulfate de baryum et/ou une dispersion colloïdale aqueuse, à corps mince, non sédimentante, de particules de dioxyde de silicium nanopar-ticulaires.

2. Liquide aqueux d'écriture, de marquage et/ou de dessin suivant la revendication 1, dans lequel le graphite est contenue en une concentration de 1 à 30% en poids, notamment en une concentration de 5 à 20% en poids.

3. Liquide aqueux d'écriture, de marquage et/ou de dessin suivant la revendication 1 ou 2, dans lequel le graphite a une teneur en carbone comprise entre 96 et 97% en poids, une teneur en cendres comprise entre 3 et 4% en poids, et une taille de particules < 20 µm à D90.

4. Liquide aqueux d'écriture, de marquage et/ou de dessin suivant la revendication 1 ou 2, dans lequel le graphite a une teneur en carbone comprise entre 98,5 et 99,5% en poids, une teneur en cendres comprise entre 0,1 et 0,5% en poids, et une taille de particules < 10 µm à D90.

5. Liquide aqueux d'écriture, de marquage et/ou de dessin suivant l'une des revendications précédentes, dans lequel l'agent mouillant est contenu en une concentration de 0,5 à 3% en poids.

6. Liquide aqueux d'écriture, de marquage et/ou de dessin suivnat l'une des revendications précédentes, dans lequel on utilise comme agent mouillant un polysiloxane modifié par un polyéther.

7. Liquide aqueux d'écriture, de marquage et/ou de dessin suivant l'une des revendications précédentes, dans lequel au moins un agent humectant est contenu, notamment en une proportion comprise entre 2 et 10% en poids.

8. Liquide aqueux d'écriture, de marquage et/ou de dessin suivant l'une des revendications précédentes, contenant au moins un l'agent de conservation, notamment en une concentration de 0,2 à 2,5% en poids au maximum.

9. Liquide aqueux d'écriture, de marquage et/ou de dessin suivant l'une des revendications précédentes, contenant du carbone amorphe, notamment en une proportion comprise entre 0,1 et 8% en poids.

10. Liquide aqueux d'écriture, de marquage et/ou de dessin suivant l'une des revendications précédentes, contenant au moins un agent colorant et/ou au moins un pigment de couleur.

11. Liquide aqueux d'écriture, de marquage et/ou de dessin suivant la revendication 10, dans lequel le au moins agent colorant et/ou le au moins pigment de couleur est contenu en une concentration de 0,1 à 5% en poids.

12. Aqueux d'écriture, de marquage et/ou de dessin suivant la revendication 10 ou 11, dans lequel le colorant contenu est un colorant anionique.

13. Appereil d'application, notamment appareil d'écriture, de marquage ou de dessin, contenant une pointe (3) d'écriture, de marquage ou de dessin en une matière capillaire et un réservoir (2) en une matière capillaire, dans lequel est contenu un liquide aqueux d'écriture, de marquage et/ou de dessin suivant l'une des revendications précédentes.
